# EUROPEAN PATENT SPECIFICATION

(11) **EP 0 554 102 B1**
(45) Date of publication and mention of the grant of the patent: **10.09.1997**
(21) Application number: 93300652.0
(22) Date of filing: 29.01.1993
(51) Int. Cl.: G01G 19/44, G01G 21/23

(54) **A platform scale**
Platformwaage
Balance du type plate-forme

(30) Priority: 29.01.1992 GB 9201850
(43) Date of publication of application: 04.08.1993
(73) Proprietor: HANSON INDUSTRIES LIMITED, Sligo (IE)
(72) Inventor: Stephens, Brian, Dun Laoghaire, County Dublin (IE)
(74) Representative: Johnson, Terence Leslie

(56) References cited:
- EP-A- 0 189 226
- WO-A-85/03771
- WO-A-90/08945
- DE-A- 3 544 577
- FR-A- 2 174 836
- US-A- 2 611 663

## Description

The invention relates to a platform for a platform scale, particularly such a scale as used for personal weighing.

Personal weighing scales are often formed with a platform supported over a base, with a mechanism therebetween which can respond to a weight applied to the platform as the platform moves towards the base under applied load. The mechanism is calibrated to give a readout of the weight applied.

In order to provide sensitivity in the mechanism, the platform is generally required to be light, strong and yet poised on bearings which enable it to deflect smoothly, so providing a positive action.

Known scales do not provide such an action. Examples of prior art scales can be found in WO-A1-90-8945 and WO-A1-85-3771.

It is accordingly an object of the invention to seek to mitigate this disadvantage.

According to one aspect of this invention there is provided a platform for a platform scale, comprising a plurality of spaced apart bearings depending from the platform, each bearing including a plurality of bearing elements adapted to bear on a substrate, the bearings being integral with the platform, characterised by the platform being of sheet metal and by each bearing being folded therefrom.

There may be two bearings.

The bearings may be situated at opposite sides of the platform substantially equidistant from adjacent boundary edges of the platform.

The bearings may be positioned at a respective corner of the platform, where the platform is substantially rectangular in plan.

The bearing elements may comprise spaced feet of the respective bearings.

The feet may be angled at an angle of about 30° to the centre of the bearing.

The bearings may be secured to the platform by a curved fold line, preferably an arcuate fold line.

The bearings may each include a bracing device.

The bracing device may comprise a gusset formed in the material of the bearing, preferably of a triangular shape in plan.

The gusset may be at a major surface of the platform.

The platform may include retainer means for receiving a bearing of the substrate.

The retainer means may comprise spaced apart tongues.

There may be two tongues one of which may have at least a part which may be angled towards the other.

Furthermore, there may be dimple means adjacent the tongue means. This provides for a seating for a bearing of the substrate whilst providing strength in the platform.

According to a second aspect of the invention, there is provided a platform scale, including a base, and a platform as hereinbefore defined.

A platform for a platform scale such as a personal weighing scale is hereinafter described, by way of example, with reference to the accompanying drawings.

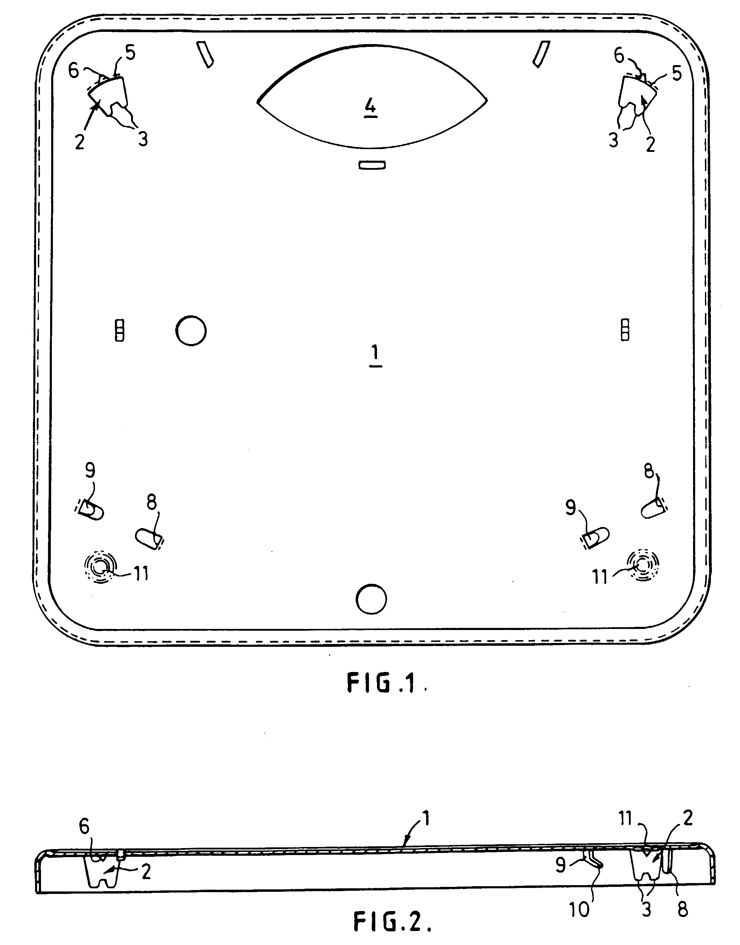

Fig. 1 is a plan view from the interior of a platform according to the invention;
Fig.2 is a transverse sectional view of the platform of Fig.1;

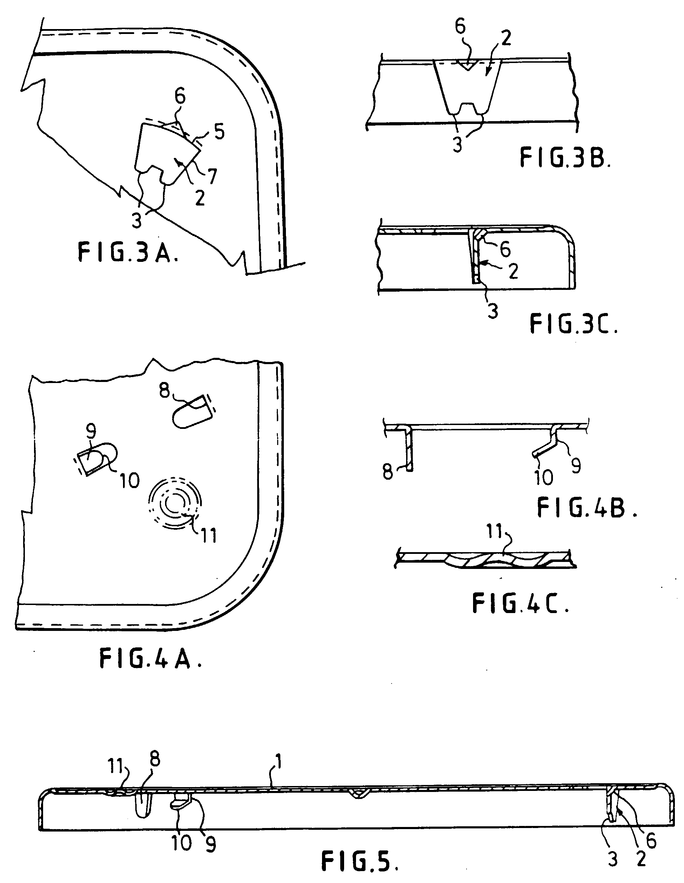

Figs. 3A, 3B and 3C, are respectively plan, elevational and sectional views of a bearing of the platform of Figs. 1 and 2;
Figs. 4A, 4B and 4C are respectively plan, elevational and sectional views of retainer means of the platform of Figs. 1 and 2;

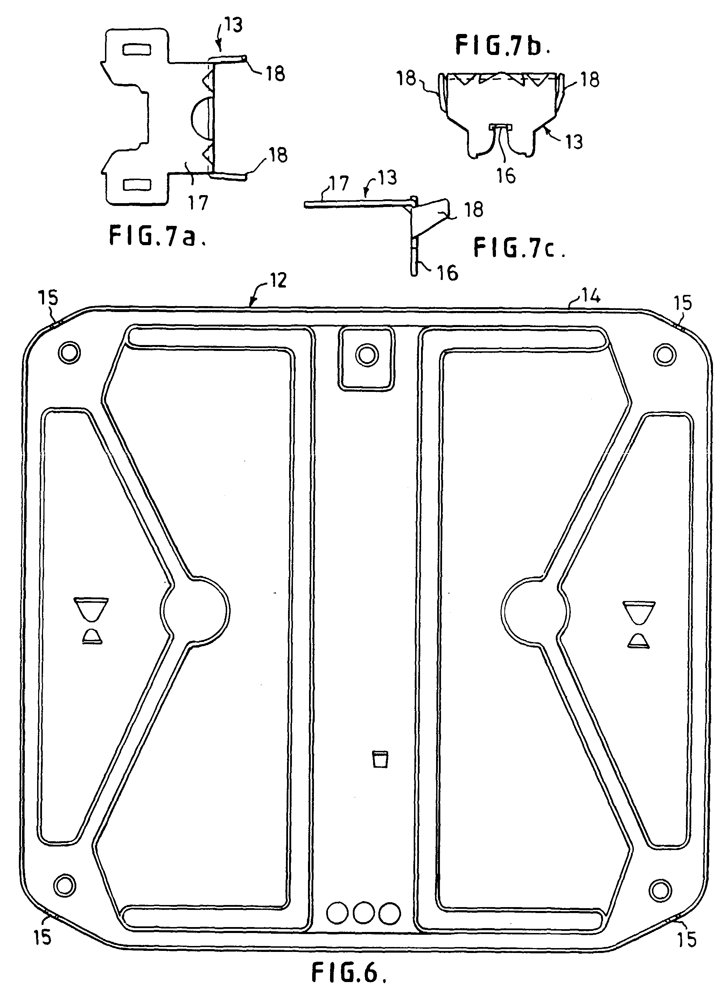

Fig.5 is a transverse sectional view of the platform of Figs. 1 and 2, taken through the bearing and retaining means;
Fig. 6 is a plan view of a base of a platform scale for use with a platform of Figs. 1 - 5; and
Figs. 7a to 7c are respective plan, end and side elevational views of a corner stand of the platform scale according to the invention.

Referring to the drawings, there is shown a platform 1 for a platform scale such as a personal weighing scale, comprising a plurality of spaced apart bearings 2 depending from the platform 1 and each including a plurality of bearing elements 3 adapted to bear on a substrate, in this case the interior surface (in use) of a base 12 of the assembled scale.

The platform is made of sheet metal and the bearings 2 of which there are two, are situated at opposite sides thereof, with a viewing aperture 4 for a dial or digital readout or LED therebetween, the bearings 2 being equidistant from adjacent boundary edges of the platform and positioned at a respective corner of the platform and angled thereacross, the platform being of substantially rectangular shape in plan. The bearings 2 are each turned or folded out of the material of the platform along an arcuate fold line 5 and each have a bracing device comprising an indent or guest 6 of triangular configuration at the underside (in use) of the platform, the apex of the triangle having an angle of 90°. Each bearing is generally planar and terminates in the bearing elements 3 which are in the form of spaced feet at the base of legs 7 of the respective elements, the legs being inclined respectively at substantially 30° to the centre line of the bearing 2.

At the opposite end of the platform from the bearings 2 are aligned retainer means in the form of spaced apart tongues 8, 9 one of which has an end part 10 angled toward the other tongue 9; there is dimple means 11 between each pair of tongues, the dimples providing a seating for a bearing of the base and providing strength in the platform.

The tongue means 8, 9 act to retain bearings in the form of corner stands 13 of the base 12 so that the base 12 and platform 1 in the assembled scale are joined together for relative movement in the vertical (as considered in use) plane so as to activate the operating mechanism such as a lever system (not shown) for responding to the weight of a person standing on the platform 1, and for indicating the weight through a viewing window in the platform. The weight sensing and operating mechanism does not form part of the invention. The base, however, has an upstanding wall 14 which at the corners has slots or notches 15 cut out thereof to provide mounting positions for planar levers of the mechanism, mounted on the edge.

The corner stand 13 has a bearing 16 of knife-edge form for balancing a lever of the system, a base 17 for steadying the corner stand and lateral wings 18 which bear on the base 14 to provide stability.

## Claims

1. A platform for a platform scale, comprising a plurality of spaced apart bearings (2) depending from the platform (1), each bearing (2) including a plurality of bearing elements (3) adapted to bear on a substrate, the bearings (2) being integral with the platform (1) characterised by the platform (1) being of sheet metal and by each bearing (2) being folded therefrom.

2. A platform according to Claim 1, characterised by there being two bearings (2) situated at opposite sides of the platform (1), substantially equidistant from adjacent boundary edges of the platform.

3. A platform according to Claim 2. characterised by the bearings (2) being positioned at a respective corner of the platform (1).

4. A platform according to any preceding claim, characterised by bearing elements (3) of each bearing (2).

5. A platform according to Claim 4, characterised by the bearing (2) being folded out of the metal of the platform along an arcuate fold line (5).

6. A platform according to Claim 5, characterised by a bracing device (6) at the underside of the platform (1).

7. A platform according to Claim 6, characterised by the bracing device (6) being of substantially triangular configuration.

8. A platform according to any of Claims 4 to 7, characterised by the bearing elements (3) comprising spaced feet at the base of legs (7) of the respective elements.

9. A platform according to Claim 8, characterised by retainer means (8, 9, 10) of the platform opposite the bearings (2).

10. A platform according to Claim 9, characterised by a retainer tongue means (8) with a part (10) angled towards a tongue means (9).

11. A platform according to Claim 10, charactensed by dimple means (11) between the tongue means (8, 9).

12. A platform scale, including a base, and characterised by a platform (1) according to any preceding claim mounted on the base.

## Patentansprüche

1. Plattform für eine Plattformwaage, die folgendes umfaßt: Eine Mehrzahl beabstandeter Lager (2), die an der Plattform (1) hängen, wobei jedes Lager (2) eine Mehrzahl von Lagerelementen (3) umfaßt, die dazu angepaßt sind, auf einem Träger aufzuliegen, wobei die Lager (2) an die Plattform (1) angeformt sind, dadurch gekennzeichnet, daß die Plattform (1) aus Blech gebildet ist und die jeweiligen Lager (2) von ihr weggefaltet sind.

2. Plattform nach Anspruch 1, dadurch gekennzeichnet, daß sich auf gegenüberliegenden Seiten der Plattform (1), im wesentlichen im gleichen Abstand von benachbarten Begrenzungskanten der Plattform entfernt, zwei Lager (2) befinden.

3. Plattform nach Anspruch 2, dadurch gekennzeichnet, daß die Lager (2) an einer jeweiligen Ecke der Plattform (1) positioniert sind.

4. Plattform nach einem beliebigen vorstehenden Anspruch, dadurch gekennzeichnet, daß jedes Lager (2) Lagerelemente (3) aufweist.

5. Plattform nach Anspruch 4, dadurch gekennzeichnet, daß das Lager (2) entlang einer bogenförmigen Falzlinie (5) aus dem Metall der Plattform herausgefaltet ist.

6. Plattform nach Anspruch 5, dadurch gekennzeichnet, daß sich an der Unterseite der Plattform (1) eine Verankerungsvorrichtung (6) befindet.

7. Plattform nach Anspruch 6, dadurch gekennzeichnet, daß die Verankerungsvorrichtung (6) eine im wesentlichen dreieckige Gestalt aufweist.

8. Plattform nach einem der Ansprüche 4 bis 7, dadurch gekennzeichnet, daß die Lagerelemente (3) an der Basis von Schenkeln (7) der jeweiligen Elemente beabstandete Füße umfassen.

9. Plattform nach Anspruch 8, dadurch gekennzeichnet, daß sich gegenüber den Lagern (2) Halteeinrichtungen (8, 9, 10) der Plattform befinden.

10. Plattform nach Anspruch 9, dadurch gekennzeichnet, daß eine Haltezungeneinrichtung (8) bereitgestellt ist, von der ein Teil (10) auf eine Zungeneinrichtung (9) zu gewinkelt ist.

11. Plattform nach Anspruch 10, dadurch gekennzeichnet, daß sich zwischen den Zungeneinrichtungen (8, 9) Vertiefungseinrichtungen (11) befinden.

12. Plattformwaage, die eine Basis umfaßt und dadurch gekennzeichnet ist, daß auf der Basis eine Plattform (1) nach einem der vorhergehenden Ansprüche angebracht ist.

## Revendications

1. Plateau pour balance à plateau, comprenant une pluralité d'appuis (2) espacés les uns des autres et pendant du plateau (1), chaque appui (2) comportant une pluralité d'éléments d'appui (3) adaptés pour s'appuyer sur un support, les appuis (2) étant solidaires du plateau (1), caractérisé en ce que le plateau (1) est en tôle et en ce que chaque appui (2) est plié à partir de cette dernière.

2. Plateau selon la revendication 1, caractérisé en ce qu'il y a deux appuis (2) situés sur des côtés opposés du plateau (1), sensiblement équidistants des bords limites adjacents du plateau.

3. Plateau selon la revendication 2, caractérisé en ce que les appuis (2) sont positionnés respectivement à un coin du plateau (1).

4. Plateau selon une revendication précédente quelconque, caractérisé par des éléments d'appui (3) de chaque appui (2).

5. Plateau selon la revendication 4, caractérisé en ce que l'appui (2) est plié à partir du métal qui forme le plateau le long d'une ligne de pliage arquée (5).

6. Plateau selon la revendication 5, caractérisé par un dispositif d'entretoisement (6) au niveau du dessous du plateau (1).

7. Plateau selon la revendication 6, caractérisé en ce que le dispositif d'entretoisement (6) est de configuration sensiblement triangulaire.

8. Plateau selon l'une quelconque des revendications 4 à 7, caractérisé en ce que les éléments de appui (3) comprennent des pieds espacés au niveau de la base des jambes (7) des éléments respectifs.

9. Plateau selon la revendication 8, caractérisé par des moyens de maintien (8, 9, 10) du plateau à l'opposé des appuis (2).

10. Plateau selon la revendication 9, caractérisé par un moyen de langue de maintien (8) dont une partie (10) forme un angle en direction d'un moyen de langue (9).

11. Plateau selon la revendication 10, caractérisé par un moyen de cratère (11) entre les moyens de langue (8, 9).

12. Balance à plateau, comportant une base, et caractérisée par un plateau (1) selon une revendication précédente quelconque monté sur la base.
